# EUROPÄISCHE PATENTSCHRIFT

(11) **EP 3 670 292 B1**
(45) Veröffentlichungstag und Bekanntmachung des Hinweises auf die Patenterteilung: **13.01.2021**
(21) Anmeldenummer: 18213828.9
(22) Anmeldetag: 19.12.2018
(51) Int. Cl.: B62B 3/14, B62B 3/16, B62B 5/00

(54) **SYSTEM ZUM TRANSPORTIEREN, UMSCHLAGEN UND/ODER LAGERN VON WAREN**
SYSTEM FOR TRANSPORTING, HANDLING AND/OR STORAGE OF GOODS
SYSTÈME DE TRANSPORT, DE MANUTENTION ET/OU DE STOCKAGE DES MARCHANDISES

(43) Veröffentlichungstag der Anmeldung: 24.06.2020
(73) Patentinhaber: Koch, Hilko, 47800 Krefeld (DE)
(72) Erfinder: Koch, Hilko, 47800 Krefeld (DE)
(74) Vertreter: Raffay & Fleck

(56) Entgegenhaltungen:
- EP-A2- 1 495 937
- WO-A1-2013/002642
- AU-B2- 1 584 788
- DE-A1- 2 116 537
- DE-U1-202010 012 452
- US-A- 3 245 239
- US-A- 5 713 539
- US-A1- 2016 137 215

## Beschreibung

Die Erfindung liegt allgemein auf dem Gebiet der Logistik und betrifft insbesondere ein System zum Transportieren, Umschlagen und/oder Lagern von Waren, insbesondere von Stückgutwaren im Groß- und Einzelhandel, mit den Merkmalen des Oberbegriffs des Anspruchs 1.

Auf dem Gebiet der Logistik ist es allgemein bekannt, Waren, insbesondere Stückgutwaren, in Aufnahmebehältern unterzubringen, zum Beispiel in Transport- und Lagerkartons oder auch in Kisten, und diese Aufnahmebehälter dann wiederum in zu kompakten Gebindeeinheiten zusammengestellter Form zu einem Absatzort, wie zum Beispiel einem Einzelhandelsgeschäft, zu transportieren und dort zu lagern. Dieser Transport wird häufig mit Kraftfahrzeugen durchgeführt, zum Beispiel mit klassischen Kastenwagen oder Lastkraftwagen mit einer eingehausten Ladefläche und einem typischen zulässigen Gesamtgewicht von 7,5 t bis zu 40 t. Auch der Umschlag solcher Gebindeeinheiten, also ein Be- und Entladen von Transportmitteln oder der Wechsel eines Transportmittels ist bekannt.

Um die Aufnahmebehälter kompakt zu größeren Packeinheiten zusammenzustellen, werden diese häufig aufeinandergestapelt und sind die Behälter in vielen Fällen insbesondere stapelbar ausgebildet, haben entsprechend Stapelstrukturen auf einer Unter- sowie auf einer Oberseite des jeweiligen Behälters, sodass sie innerhalb einer Aufstellebene des Stapels formschlüssig ineinandergreifen können. Für ein einfaches Bewegen solcher Stapel werden weiterhin in der Logistik Rollwagen oder vergleichbare verfahrbare Basen, wie sogenannte Hunde, verwendet, auf denen die Stapel der Transportbehälter aufgebracht sind. Besonders häufig werden Rollwagen verwendet. Bei einem Rollwagen handelt es sich um eine Art Rollbrett, welches auf einer Unterseite angeordnete Räder oder Rollen aufweist, auf einer Oberseite eine Auflagefläche zum Abstellen eines untersten Transportbehälters eines Transportbehälterstapels aufweist. Die Auflagefläche ist in der Regel rechteckig und in ihren Auflagemaßen abgestimmt auf Bruchteile der Kantenabmessungen weiterer Bestandteile des Logistiksystems, insbesondere der sogenannten Europalette. Denn die Aufnahmebehälter, die in der Logistik hier verwendet werden, werden nicht nur auf solchen Rollwagen aufgestapelt, sondern zum Beispiel in der übergeordneten Logistikkette auch auf Europaletten, auf denen sie möglichst flächenfüllend aufgestellt werden sollen, um eine möglichst hohe Flächenauslastung in der Logistikkette zu erreichen und damit insbesondere Transport-, aber auch Lager- und Umschlagkosten zu minimieren. Die Rollwagen haben typischerweise mehrere, in der Regel an den längeren Seitenkanten der Auflagefläche festgelegte, seitliche Haltegitter, die sich ausgehend von der Auflagefläche bis zu einer Höhe erstrecken, die typischerweise der maximalen Stapelhöhe eines Stapels von Aufnahmebehältern entspricht, der auf der Auflagefläche des Rollwagens angeordnet ist. Die Höhe der Behälterstapel kann aber auch die Höhe der Haltegitter übersteigen. Die Haltegitter sollen bei solchen Rollwagen ein seitliches Umkippen des Aufnahmebehälterstapels verhindern. Bei einem mit einem Aufnahmebehälterstapel bepackten Rollwagen wird ein Umkippen des Aufnahmestapels in Richtung der nicht mit einem Haltegitter verschlossenen verbleibenden Seiten durch zwischen den Haltegittern geführten Riegelelementen, wie zum Beispiel elastischen Spanngurten, Ketten oder Seilen, verhindert. Problematisch bei dieser Logistikeinheit aus Rollwagen und Aufnahmebehältern ist nun, dass bei einem Nebeneinanderstellen beladener Rollwagen diese an den Längsseiten jeweils mit ihren seitlich angeordneten Haltegittern aneinanderstoßen und somit ein kompaktes Seite-an-Seite Anordnen derartiger Gebindeeinheiten verhindern. Dies bedeutet nun, dass zum Beispiel auf den eingehausten Ladeflächen eines typischen Lastkraftwagens, deren Grundfläche ebenfalls im Wesentlichen nach den Abmessungen von Europaletten bemessen ist, die Rollwagen nicht kompakt und platzsparend nebeneinander aufgestellt werden können, sondern sich eine vergleichsweise geringe Packungsdichte bzw. Flächenauslastung der Ladefläche ergibt. Entsprechend können solche Lieferfahrzeuge mit einer entsprechend geringeren Auslastung beladen werden, was zu erhöhten Kosten und Aufwendungen in den Logistikkette führt. Die ist insbesondere auch dort zusätzlich von wesentlichem Nachteil, wo die Logistikkette in die für das Befahren mit entsprechenden groß dimensionierten Fahrzeugen häufig nur in bestimmten Zeiten freigegebenen Innenstadtbereiche erfolgen muss, um dort ansässige Handelsgeschäfte zu beliefern. Ein weiterer Nachteil dieser bekannten Lösung besteht darin, dass die Rollwagen auch nach einem Abladen der auf ihnen in Aufnahmebehältern angeordneten Waren weiterhin den gleichen Platzbedarf haben, sodass auch für Leertransporte der bloßen Rollwagen ein gleicher Bedarf an Laderaumkapazität besteht.

Aufgrund analoger Überlegungen ist das bekannte System auch im Hinblick auf das Lagern der in den Gebindeeinheiten zusammengefassten Waren problematisch. Denn auch hier nehmen die mit den Aufnahmebehältern befüllten Rollwagen in einem erheblichen Umfang Fläche ein, erfordern also kostspielige Lagerraumkapazitäten, zum Beispiel vor Ort in einem Einzelhandelsgeschäft, zum Beispiel einem Lebensmittelladen oder Supermarkt. Auch hier ist wiederum besonders nachteilig, dass entladene und vor dem Rücktransport zwischenzulagernde Rollwagen den gleichen Raumbedarf im Lager haben, wie die mit in gestapelten Aufnahmebehältern angeordneter Ware befüllten Rollwagen.

Aus der EP 1 495 937 A2 ist ein System bekannt, welches mit einem Auflagebrett gestaltete Rollwagen und Aufnahmebehälter umfasst, wobei die Aufnahmebehälter auf dem Auflagebrett eines Rollwagens gestapelt werden können. Die Rollwagen selbst können ebenfalls gestapelt werden, wozu auf der Oberseite der Auflagebretter Schlitze vorgesehen sind, in die die Rollen eines aufzustapelnden Rollwagens eingreifen können. Das aus diesem Dokument bekannte System verfügt über keine Möglichkeit, die auf einem Rollwagen aufgestapelten Aufnahmebehälter und/oder aus aufeinandergestellten Rollwagen gebildete Stapel zu sichern.

Die DE 20 2010 012 452 U1 beschäftigt sich mit dem Problem aufeinander gestapelte Rollwagen zu fixieren. Hierfür wird dort ein Montagehaken aufweisendes, starres Schienenelement vorgeschlagen, das zum Fixieren eines Rollwagenstapels mit Strukturen an den aufeinandergestellten Rollwagen verbunden werden kann.

In der US 2016/0137215 A1 ist ein System aus stapelbaren Rollwagen beschrieben. Die Rollwagen haben einen Auflageboden und an einander gegenüberliegenden Seitenbereichen des Auflagebodens jeweils zwei senkrecht zu dem Auflageboden verlaufenden Aufnahmehülsen, in die ein als U-Rohr geformtes Griffelement mit den offenen Enden des U eingesetzt werden und dort mittels eines Riegelstifts festgelegt werden kann. Die Griffelemente können dabei auch dazu verwendet werden, einen Stapel aus aufeinandergestellten Rollwagen zu fixieren, indem sie mit den offenen Enden des U durch die in Flucht gebrachten Aufnahmehülsen der übereinander gestapelten Rollwagen geführt und in der Hülse des zuunterst in dem Stapel stehenden Rollwagens mit den Riegelstiften fixiert werden.

Den vorstehend beschriebenen, im Stand der Technik erkannten Problemen widmet sich die vorliegende Erfindung und sucht hier Abhilfe zu schaffen. Der Erfindung liegt mit anderen Worten also die Aufgabe zugrunde, ein System zum Transportieren, Umschlagen und/oder Lagern von Waren, insbesondere von Stückgutwaren im Groß- und Einzelhandel, anzugeben, welches die oben geschilderten Nachteile vermeidet, insbesondere eine verbesserte Grundflächenauslastung von Lade- und Lagerfläche in Transport und in der Lagerung ermöglicht. Diese Aufgabe wird erfindungsgemäß gelöst durch ein System zum Transportieren, Umschlagen und/oder Lagern von Waren, insbesondere von Stückgutwaren im Groß- und Einzelhandel mit den Merkmalen des Anspruchs 1. Vorteilhafte Weiterbildungen eines solchen Systems sind in den abhängigen Ansprüchen 2 bis 14 bezeichnet.

Gemäß der Erfindung enthält ein verbessertes System zum Transportieren, Umschlagen und/oder Lagern von Waren, insbesondere von Stückgutwaren im Groß- und Einzelhandel, folgende Komponenten:
- Aufnahmebehälter für die Aufnahme von Waren während eines Transports und/oder während einer Lagerung, die jeweils einen Boden, eine umlaufende Seitenwand und eine obere Öffnung aufweisen und die stapelbar gebildet sind. Für diese Stapelbarkeit weisen die Aufnahmebehälter im Bereich ihres Bodens jeweils Stapelstrukturen auf und Gegenstrukturen in einem Bereich einer zu der die obere Öffnung aufweisenden Oberkante der Seitenwand. Die Stapelstrukturen und Gegenstrukturen wirken in einer solchen Weise zusammen, dass sie ein innerhalb einer Ebene des Bodens formschlüssig verriegelndes Aufeinanderstapeln von Aufnahmebehältern ermöglichen.
- Wenigstens eine Rolltransporteinheit mit einer Aufstellfläche für wenigstens einen Aufnahmebehälter und auf einer der Aufstellfläche gegenüberliegenden Unterseite angeordneten Rollenmitteln, zum Beispiel Rollen oder Rädern, die feststehend oder lenkbar sein können. Die Aufstellfläche der wenigstens einen Rolltransporteinheit weist zu den Stapelstrukturen korrespondierende Aufnahmestrukturen auf zum innerhalb einer Ebene der Aufstellfläche formschlüssig verriegelnden Aufstellen eines Aufnahmebehälters.
- Als erfindungswesentliche Neuerung: Wenigstens eine Riegelstange, die zwei Längsenden aufweist und in ihrer die Längsenden verbindenden Länge verstellbar, insbesondere teleskopartig verstellbar, ist. An einem ersten der Längsenden der Riegelstange ist eine erste Haltestruktur zum Verbinden mit einer Oberkante eines Aufnahmebehälters vorgesehen und an einem zweiten der Längsenden der Riegelstange ist eine zweite Haltestruktur zum Verbinden mit einer, insbesondere auf der Unterseite angeordneten, Gegenstrukturen der Rollentransporteinheit vorgesehen. Die Riegelstange weist weiterhin einen lösbaren Fixiermechanismus auf zum Begrenzen der auf ein ausgewähltes Maß eingestellten Länge der Riegelstange auf dieses ausgewählte Maß.

Das Besondere an diesem System ist der Ansatz, einen durch die entsprechenden Stapelstrukturen und Aufnahmestrukturen in den verschiedenen Verbindungsebenen, die parallel zur Aufstellfläche verlaufen, bereits formschlüssig verriegelten Stapel aus Aufnahmebehältern weiterhin mittels der Riegelstange in einem Formschluss zu fixieren. Hierzu wird die Riegelstange erstens mit der an einem ersten der Längsenden vorgesehenen Haltestruktur mit der Oberkante eines obersten in dem Stapel befindlichen Aufnahmebehälters verbunden, wird zweitens die Haltestruktur an dem zweiten der Längsenden der Riegelstange mit der Gegenstruktur an der Rolltransporteinheit verbunden und wird dann drittens die Länge der Riegelstange so weit verkürzt, bis die Riegelstange mit den jeweiligen Haltestrukturen an ihren Längsenden formschlüssig an der Oberkante des obersten Aufnahmebehälters des Aufnahmebehälterstapels einerseits und mit der Gegenstruktur an der Rolltransporteinheit andererseits verbunden ist und diese Verbindungen aufgrund der reduzierten Länge aufrecht erhält. Die Riegelstange umgreift also wie eine Art Klammer ausgehend von der Rolltransporteinheit den gesamten Stapel der Aufnahmebehälter bis hin zum obersten Aufnahmebehälter in dem Stapel und verhindert dadurch ein Abheben und Lösen einzelner Aufnahmebehälter von bzw. aus dem Stapel. Hierbei können mit Vorteil wenigstens zwei Riegelstangen verwendet werden, die zum Beispiel an den einander gegenüberliegenden Längskanten einer in ihrer Aufstellfläche rechteckig gebildeten Rolltransporteinheit oder entsprechend an den einander gegenüberliegenden Längskanten von mit rechteckig gebildeten Böden versehenen Aufnahmebehältern entlang geführt werden und somit an zwei einander gegenüberliegenden Seiten den Stapel aus Aufnahmebehältern fixieren und an der Rolltransporteinheit festlegen.

Die Riegelstangen können dabei in ihren Querschnittsabmessungen vergleichsweise schmal gestaltet sein, sodass sie kaum zusätzlichen Platz bei einem nebeneinander Anordnen von zwei oder mehr mit jeweils einer Rolltransporteinheit und darauf aufgestapelten Aufnahmebehälter gebildeten Kolli beanspruchen, insbesondere wenn dabei darauf geachtet wird, dass die Riegelstangen versetzt zueinander angeordnet sind, sodass der Abstand zwischen zwei beladenen und mit den Riegelstangen gesicherten Rolltransporteinheiten lediglich einmal einer Breite, bzw. Tiefe des Querschnitts der Riegelstange entspricht.

Es lassen sich mit einer solchen Konzeption die entsprechend gebildeten Kolli, d. h. die auf den Rolltransporteinheiten aufgesetzten und mit den Riegelstangen gesicherten Stapel aus Aufbewahrungsbehältern, zum Beispiel auf der Ladefläche eines Lastkraftwagens in einer verglichen mit der Anordnung vorbeschriebener Rollwagen deutlich kompakteren Anordnung unterbringen. In beispielhaften Berechnungen hat der Erfinder ermittelt, dass sich so eine Steigerung der Transportkapazität, also der Flächenauslastung, auf der Ladefläche eines typischen Lastkraftwagens mit 7,5 t zulässigem Gesamtgewicht im Vergleich zu einer Bestückung mit auf herkömmlichen Rollwagen aufgesetztem Transportbehältern von ca. 15 % erzielen lässt.

Diese erhaltene Flächenersparnis ist aber nicht nur im Hinblick auf den Transport der Kolli, sondern auch im Hinblick auf deren Lagerung, zum Beispiel in einer Lagerfläche eines Handelsgeschäfts, von besonderem Vorteil. Weiterhin entfallen bei den Rolltransporteinheiten des erfindungsgemäßen Systems im Vergleich zu den bekannten Rollwagen die Haltegitter, sodass die Rolltransporteinheiten an sich vergleichsweise flache Einheiten sind, die für eine Zwischenlagerung bis zum Rücktransport im Logistiksystem oder auch während eines solchen Rücktransportes mit deutlich weniger Raumbedarf abgestellt und angeordnet werden können. Auch die Riegelstangen nehmen für deren Lagerung und Transport nur einen geringen Raum ein, sodass auch diese für den geringen Raumbedarf, bzw. die hohe Raumausnutzung des erfindungsgemäßen Systems einen wesentlichen Beitrag leisten.

Die Gegenstruktur, die die in dem erfindungsgemäßen System integrierte Rolltransporteinheit auszeichnet und an der die Haltestruktur an dem zweiten Längsenden der Riegelstange angreift, kann zum Beispiel eine auf der Unterseite randnah angeordnete einfache Leiste sein, hinter die eine Haltestruktur, zum Beispiel eine hakenförmige Struktur, am zweiten Längsenden der Riegelstange greifen und dort festgelegt, insbesondere eingehakt, werden kann. Eine solche Leiste kann durchgehend sein, sie kann aber auch lediglich einen Abschnitt der Länge der Seitenkante, in deren Bereich sie angeordnet ist, überstreichen. Auch andere Gegenstrukturen sind denkbar, zum Beispiel Bohrungen, in die entsprechende die Haltestruktur an dem zweiten Längsende der Riegelstange ausmachende Dorne oder dergleichen eintauchen und so festgelegt werden können oder andere geeignete Strukturen. Hier werden dem Fachmann weitere mögliche Strukturen ohne weiteres in den Sinn kommen, wobei der Erfinder aktuell eine leistenförmige Gegenstrukturen bevorzugt, da diese einfach zu bilden ist und im Zusammenwirken mit der Haltestruktur am zweiten Längsenden der Riegelstange einen einfachen Formschluss herstellen lässt.

Die mithilfe der Riegelstange bzw. möglicherweise von mehreren Riegelstangen gebildete Gebindeeinheit (ein Kollo) des Stapels der Aufnahmebehälter auf der Rolltransporteinheit kann nun einfach gehandhabt werden, indem die Riegelstange(n) als Griff(e) verwendet wird/werden für ein Verschieben der Rolltransporteinheit entlang eines Untergrundes. Auch das Überwinden von Hindernissen, zum Beispiel Bordsteinkanten, ist mit diesem System einfach möglich. Denn die Rolltransporteinheit kann mit dem darin fixierten Stapel zum Beispiel durch entsprechendes Ziehen an der Riegelstange, bzw. an den Riegelstangen gekippt werden, ohne dass der Stapel der Aufnahmebehälter sich lösen und umfallen könnte. So können beispielsweise durch entsprechendes Verkippen Räder oder Rollen der Rolltransporteinheit angehoben und auf einem höheren Niveau abgesetzt werden, kann dann eine zweite Einheit der Räder nachgehoben werden, um eben beispielsweise eine Bordsteinkante zu überwinden.

Grundsätzlich genügt es, wenn der Fixiermechanismus der Riegelstange so eingerichtet ist, dass er lediglich eine Vergrößerung der Länge der Riegelstange nach deren Einstellung und Fixierung verhindert, eine weitere Verringerung der Länge grundsätzlich zuließe. Ein solcher Mechanismus kann zum Beispiel durch einen Ratschenmechanismus realisiert sein. Wichtig ist nämlich allein, dass die Riegelstange nach Festlegen der maximal erlaubten Länge in ihrer Länge nicht mehr erweitert werden kann, sodass die Haltestrukturen nicht mehr von den Gegenstrukturen gelöst werden können und der über die Länge und das Zusammenwirken der Haltestrukturen an den beiden Längsenden der Riegelstange mit der Oberkante des obersten Aufnahmebehälters in dem auf der Aufstellfläche aufgestellte Stapel der Aufnahmebehälter, bzw. mit der Gegenstruktur an der Rolltransporteinheit hergestellte Formschluss quer zu der Ebene Aufstellfläche und quer zu der Ebene der Böden der Aufnahmebehälter erhalten bleibt. Es ist aber ebenso gut möglich, dass der Fixiermechanismus der Riegelstange dazu eingerichtet ist, die Länge der Riegelstange auf das eingestellte Maß zu fixieren, sodass nicht nur keine erneute Ausdehnung der Länge erfolgen kann, sondern auch keine weitere Verkürzung. Dies kann zum Beispiel bei einer teleskopierbaren Stange mit einem Exzenterhebel und einem Druckstück kraftschlüssig geschehen oder auf andere, an sich bekannte Weise. Es genügt, wie erwähnt, grundsätzlich für die Herstellung des für die Umsetzung der Erfindung relevanten Formschlusses, wenn die Riegelstange die eingestellte und fixierte Länge nicht mehr erweitern kann. Das Aufbringen einer Zugkraft zum weiteren Fixieren des Stapels ist nicht erforderlich. Gleichwohl kann aber auch vorgesehen sein, dass die Riegelstange ein elastisches Spannmittel, z.B. eine Feder, aufweist, die ausgehend von einer eingestellten Länge eine zu einer weiteren Verkürzung der Länge der Riegelstange neigende Zugkraft aufbringt. Eine solche Zugkraft kann den erhaltenen Formschluss noch weiter sichern, wenn dies erforderlich ist, wie es bspw. bei besonders hoch aufgestapelten Stapeln von Aufnahmebehältern und/oder besonders schweren in den Aufnahmebehältern angeordneten Waren der Fall sein mag.

Die Rolltransporteinheit kann gemäß einer vorteilhaften Weiterbildung der Erfindung insbesondere ein Rolltableau mit einem die Aufstellfläche ausbildenden Abstelltableau und auf der Unterseite angeordneten Rollmitteln sein. Die Rollmittel können insbesondere Rollen oder Räder sein, wobei insbesondere wenigstens ein Teil der Rollmittel lenkbar gestaltet ist. Das Rolltableau ist mit Vorteil frei von auf der die Aufstellfläche bildenden Oberseite des Abstelltableaus angeordneten Aufbauten, die eine höhere Bauhöhe haben als eine Höhe eines Aufnahmebehälters. Eine gewisse Bauhöhe können insbesondere die Aufnahmestrukturen aufweisen, die dort korrespondierend zu den Stapelstrukturen an den Böden der Aufnahmebehälter vorgesehen sind. Dies können zum Beispiel leistenartige Aufsätze sein, die in entsprechende Rücksprünge an den Aufnahmebehälterböden passen und dort formschlüssig eingreifen. Weitere und darüber hinaus reichende Aufbauten benötigt das Rolltableau dagegen nicht, sodass es in der Bauhöhe begrenzt und damit kompakt lagerfähig gestaltet ist.

Das erfindungsgemäße System kann, wie vorstehend ebenfalls bereits erwähnt, insbesondere auch mehrere gleich gebildete Rolltransporteinheiten umfassen, die jeweils mit Stapeln von Aufnahmebehältern beladen werden können. Mit Vorteil kann das System weiterhin auch eine Vielzahl von Riegelstangen aufweisen.

Wenn das System mehrere Transporteinheiten aufweist, so kann wenigstens ein Teil, können insbesondere alle, der Rolltransporteinheiten in der Aufstellfläche Strukturen zum formschlüssigen Aufnehmen der Rollmittel einer auf die Aufstellfläche aufgestellten weiteren Rolltransporteinheit aufweisen. Eine solche Ausbildung hilft für das Aufeinanderstapeln von Rolltransporteinheiten. Der Vorteil besteht hier nun wiederum darin, dass ein Stapel aus aufeinander gestapelten Rolltransporteinheiten (ungeachtet der Frage, ob diese nun zusätzlich die Strukturen zum formschlüssigen Aufnehmen der Rollmittel aufweisen oder nicht) wiederum durch Anbringen wenigstens einer, vorzugsweise von wenigstens zwei, Riegelstange(n) formschlüssig fixiert werden kann. Denn bei einem solchen Stapel kann eine Riegelstange entsprechend mit der Haltestruktur an ihrem ersten Längsende mit den Aufnahmestrukturen einer zuoberst in dem Stapel angeordneten Transporteinheit verbunden werden, mit der Haltestruktur an dem zweiten Längsende mit der Gegenstruktur an der untersten Rolltransporteinheit in dem Stapel. Auf diese Weise können also leere und in der Logistikkette zurückzuführen Rolltransporteinheiten zu Stapeln zusammengestellt werden, können diese Stapel fixiert und gesichert werden mit den Riegelstangen. Es ergibt sich somit nicht nur eine kompakte und die Transportfläche, bzw. Lagerfläche optimal ausnutzende Transport- bzw. Lagermöglichkeit. Die so gebildeten Stapel sind zudem durch die Riegelstangen gesichert und können nicht auseinanderfallen.

Die Aufnahmebehälter des erfindungsgemäßen Systems können insbesondere, vorzugsweise quaderförmig gebildete, Kisten sein. Derartige Kisten sind insbesondere in der Lebensmittellogistik, aber auch in der Logistik für andere Waren, häufig eingesetzt. So werden zum Beispiel Gemüse und Obst, aber auch Milchprodukte und andere Lebensmittel oder auch Nicht-Lebensmittelwaren, wie Bücher, in derartigen Kisten angeordnet gelagert und transportiert. Die bereits bekannten und in der Logistik vorhandenen Kisten sind für sich bereits stapelbar ausgebildet, können also in ein erfindungsgemäßes System integriert werden, ohne dass es hierbei etwaiger Veränderungen bedürfte. Auch hierin ist ein großer Vorteil des erfindungsgemäßen Systems zu sehen, dass es nämlich auf den in der Logistik bereits vorhandenen Aufnahmebehältern aufbaut und diese einfach mit integrieren kann.

Ein weiterer Vorteil für das erfindungsgemäßen System ergibt sich, wenn die Aufnahmebehälter jeweils relativ zu ihrem Boden verschwenkbare, im wesentlich parallel zu dem Boden auf diesen umschwenkbare Seitenwände aufweisen und die Seitenwände in einem umgeschwenkten Zustand auf einer dem Boden abgewandten Seite zu den Stapelstrukturen korrespondierende Aufnahmestrukturen aufweisen, bzw. ausbilden zum formschlüssig verriegelten Aufstapeln eines weiteren Aufnahmebehälters. Eine solche Ausgestaltung von klapp- oder faltbaren Aufnahmebehälter ist zum Beispiel auch schon am Markt bekannt in Form von Klappkisten als Aufnahmebehälter im Logistiksystem. Diese bereits bekannten Klappkisten können ebenfalls im zusammengeklappt Zustand aufeinander gestapelt werden, indem die eingeklappten Kisten auf ihrer Oberseite eine zu den Stapelstrukturen auf der Unterseite des Bodens korrespondierende Gegenstruktur ausbilden, in denen die Stapelstrukturen des Bodens einer aufgestellten Klappkiste eingreifen und darin formschlüssig in eine Richtung quer zur Ebene des Kistenbodens verriegeln können. Eine solche Ausgestaltung des Systems mit entsprechenden Aufnahmebehältern ergibt den Vorteil, dass die Aufnahmebehälter noch einmal platzsparender zwischengelagert werden können, dass diese auch für einen Rücktransport nach Gebrauch zur Wiederverwendung im Logistiksystem platzsparend transportiert werden können. Zudem ergibt sich hier auch der Vorteil, dass die entleerten und zusammengeklappten Aufnahmebehälter ebenfalls mit der erfindungsgemäßen Riegelstange des erfindungsgemäßen Systems in einem Stapel, aufgestapelt auf einer Rolltransporteinheit, fixiert und so festgelegt werden können, sodass kompakte Einheiten gebildet werden können, die mehrere geklappte Aufnahmebehälter umfassen. Insbesondere können, wenn auch die Rolltransporteinheiten stapelbar gebildet sind, für die Rückführung, aber auch für die Zwischenlagerung vor Ort in einem Lager des Abnehmers der mit dem erfindungsgemäßen System angelieferten Waren sehr frei Einheiten zusammengestellt und mit den Riegelstangen in Stapeln fixiert werden aus stapelbaren Rolltransporteinheiten, stapelbaren Aufnahmebehältern und stapelbaren, klappbaren (zusammengeklapptem) Aufnahmebehälter. Insbesondere besteht bei dem erfindungsgemäßen System auch die Freiheit, Stapel aus verschiedenen der Elemente des Systems gemischt zu bilden, z.B. aus mehreren Rolltransporteinheiten, mehren starren Kisten und mehreren Klappkisten, wobei auch ein solcher gemischter Stapel mithilfe einer oder mehrere Riegelstangen in der vorbeschriebenen Weise formschlüssig gesichert werden kann.

Wenn das System mehrere Rolltransporteinheiten aufweist, so kann es auch möglich sein, zwei oder auch mehrere der Rolltransporteinheiten untereinander zu verbinden, z.B. mittels Klammerelementen, die z.B. in einander gegenüberliegende Aufnahmeöffnungen in den Rolltransporteinheiten eingebracht werden können. So können dann Einheiten aus zwei oder mehrere z.B. mit gestapelten Aufnahmebehältern bepackten Rolltransporteinheiten als eine gemeinsame Gebindeeinheit bewegt werden.

Eine Besonderheit der Erfindung besteht, wie vorstehend bereits erwähnt, in der in ihrer Länge, insbesondere teleskopartig, verstellbaren, zwei einander gegenüberliegende Längsenden aufweisenden Riegelstange, die zur Verwendung in einem wie vorstehend beschriebenen System genutzt werden kann. Diese Riegelstange zeichnet sich dadurch aus, dass an einem ersten der Längsenden der Riegelstange eine erste Haltestruktur und das an einem zweiten der Längsenden der Riegelstange eine zweite Haltestruktur vorgesehen ist und dass die Riegelstange einen lösbaren Fixiermechanismus aufweist zum Begrenzen der auf ein ausgewähltes Maß eingestellten Länge der Riegelstange auf das ausgewählte Maß. Diese Riegelstange lässt sich, wie leicht erkannt werden kann, in ihrer Funktion in einer wie vorstehend beschriebenen Weise in einem vorstehend dargelegten System einsetzen und stellt dabei, gerade auch im Zusammenwirken mit der Gegenstruktur an der Unterseite der Rolltransporteinheit, einen wesentlichen Aspekt, ja das Herzstück, dieser Idee dar.

Die Riegelstange des erfindungsgemäßen Systems kann insbesondere aus zwei ineinander gesteckten Stangenelementen gebildet sein, die für eine Einstellung der Länge relativ zueinander verschiebbar sind. Selbstverständlich sind auch andere Ausgestaltungen denkbar, zum Beispiel Riegelstangen mit drei oder mehr Stangenelementen, die eine kompaktere Teleskopierbarkeit ermöglichen. Allerdings erhöht eine höhere Zahl von Stangenelementen die Komplexität des Aufbaus der Riegelstange und verringert deren Stabilität, sodass zwei Stangenelemente bevorzugt werden. Mit zwei Stangenelementen lassen sich auch ausreichende Spannen in der Längenveränderung erreichen. Eine typische Riegelstange für die Anwendung in einem vorstehend beschriebenen System kann eine maximale Länge von zum Beispiel ca. 2 m bis ca. 2,5 m aufweisen und kann, wenn sie aus zwei Stangenelementen hergestellt ist, entsprechend bis auf ca. 1,1 m bis ca. 1,4 m verkürzt werden.

Bevorzugt weist eine Riegelstange gemäß dem System der Erfindung einen rechteckigen oder quadratischen Querschnitt auf. Ein solcher ist einerseits günstig im Hinblick auf eine Orientierung der Haltestrukturen, da sich zum Beispiel zwei Stangenelementen relativ zueinander nicht verdrehen können. Des Weiteren helfen rechteckige oder quadratische Querschnitte bei einer Ausrichtung der Riegelstange relativ zu einer Außenkante eines Stapels aus Aufnahmebehältern bzw. der Aufstellfläche der Rolltransporteinheit.

Die Haltestrukturen können prinzipiell beliebig gebildet sein, angepasst auf die jeweils formschlüssig zu ergreifenden Strukturen, an denen die Haltestrukturen festzulegen sind. Bevorzugt sind die Haltestrukturen als Hakenstrukturen gebildet, da sich derartige Hakenstrukturen einfach realisieren lassen und einen zuverlässigen formschlüssigen Halt ermöglichen.

Der lösbare Fixiermechanismus der Riegelstange des erfindungsgemäßen Systems kann insbesondere eine stufenlose Längenverstellung der Riegelstange ermöglichen, sodass diese Länge entsprechend ganz unterschiedlich gebildeter, formschlüssig zu verriegeln der Stapel eingestellt werden kann.

Die Riegelstange eines Systems gemäß der Erfindung kann insbesondere und mit Vorteil aus einem metallischen Werkstoff gebildet sein, zum Beispiel aus Stahl oder aus Aluminium. Durch diese Materialwahl ist die Riegelstange ausreichend stabil und eigensteif, um die Halte- und Riegelfunktion in einem erfindungsgemäßen System, wie es vorstehend beschrieben ist, ausüben zu können.

Weitere Vorteile und Merkmale ergeben sich als der nachfolgenden Beschreibung eines Ausführungsbeispiels anhand der beigefügten Figuren. Dabei zeigen:
- Fig. 1: eine schematische Aufsicht auf die Aufstellfläche einer Rolltransporteinheit eines erfindungsgemäßen Systems zum Transportieren, Umschlagen und/oder Lagern von Waren;
- Fig. 2: eine Seitenansicht der Rolltransporteinheit eines erfindungsgemäßen Systems zum Transportieren, Umschlagen und/oder Lagern von Waren;
- Fig. 3: eine Rückansicht einer Riegelstange des erfindungsgemäßen Systems zum Transportieren, Umschlagen und/oder Lagern von Waren;
- Fig. 4: eine Seitenansicht der Riegelstange aus Fig. 3 in einer maximal teleskopierten Position;
- Fig. 5: eine Seitenansicht der Riegelstange aus Fig. 3 in einer Position mit maximaler Länge;
- Fig. 6: einen mittels eines erfindungsgemäßen Systems zum Transportieren, Umschlagen und/oder Lagern von Waren gebildeten, mit den Riegelstangen gesicherten, auf einer Rolltransporteinheit aufgesetzten Stapel aus Aufbewahrungsbehältern;
- Fig. 7: einen mittels erfindungsgemäßer Riegelstangen gesicherten Stapel aus aufeinander gesetzten Rolltransporteinheiten;
- Fig. 8: zwei mittels eines erfindungsgemäßen Systems zum Transportieren, Umschlagen und/oder Lagern von Waren gebildeten, mit den Riegelstangen gesicherten, auf je einer Rolltransporteinheit aufgesetzte Stapel aus Aufbewahrungsbehältern in einer Seitenansicht (links) und einer Rückansicht (rechts); und
- Fig. 9: verschiedene Variationen von Stapeln aus Elementen des erfindungsgemäßen Systems zum Transportieren, Umschlagen und/oder Lagern von Waren, jeweils aufgebracht auf einer Rolltransporteinheit.

In den Figuren sind in sehr schematischen Darstellungen Ausführungsformen einzelner Elemente eines erfindungsgemäßen Systems zum Transportieren, Umschlagen und/oder Lagern von Waren, insbesondere von Stückgutwaren im Groß- und Einzelhandel, in verschiedenen Ansichten dargestellt. Die gezeigten Figuren sind auf rein schematische Darstellungen beschränkt und weder maßstabsgerecht, noch detailgetreu. Sie dienen insoweit auch nicht etwa als konstruktive Vorlagen sondern lediglich der Erläuterung des Prinzips der hier offenbarten und beanspruchten Erfindung.

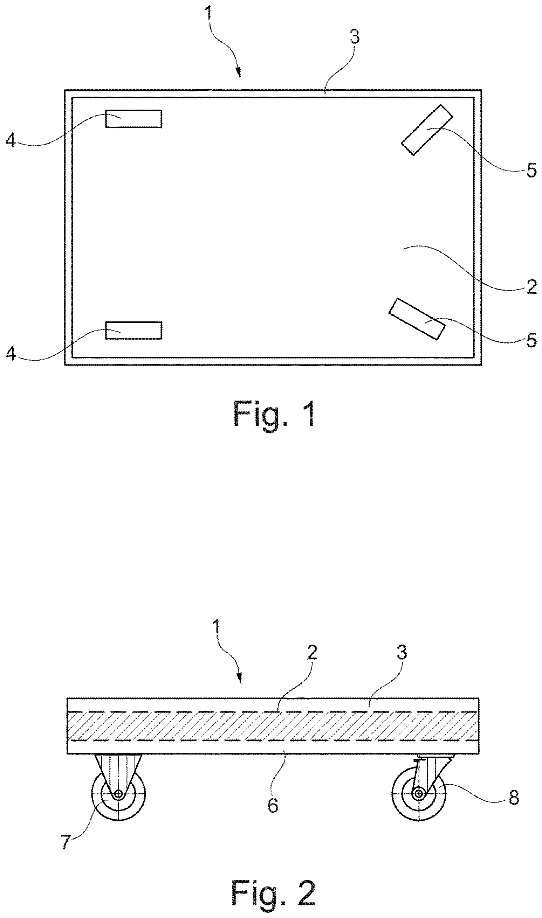

In Figur 1 ist zunächst eine Rolltransporteinheit 1 in einer Aufsicht gezeigt, nämlich mit einer Ansicht auf eine Aufstellfläche 2. Zu erkennen ist zunächst eine randseitig umlaufende Leiste 3, die die Aufstellfläche 2 begrenzt und über die Ebene der Aufstellfläche 2 hinaus vorsteht (vergleiche hierzu auch Figur 2). Weiterhin ist zu erkennen, dass in der Aufstellfläche 2 Ausnehmungen 4 und 5 eingebracht sind.

Figur 2 zeigt eine Seitenansicht der Rolltransporteinheit 1 und lässt erkennen, dass neben der über die Aufstellfläche 2 überstehenden umlaufenden Leiste 3 auch auf einer gegenüberliegenden Unterseite eine randnah gebildete Leiste 6 vorgesehen ist. Zu erkennen sind auch an der Unterseite angeordnete Räder 7 und 8. In dem hier gezeigten Ausführungsbeispiel sind die Räder 7 starr angeordnet, die Räder 8 hingegen lenkbar.

Die umlaufende Leiste 3, die die Aufstellfläche 2 oberseitig begrenzt, dient dabei als formschlüssige Stapelfixierung für eine auf die Aufstellfläche 2 aufgesetzte, entsprechend geformte bodenseitige Unterseite eines Aufnahmebehälters (vergleiche hierzu auch nachfolgend) und in die Ausnehmungen 4, 5 in der Aufstellfläche 2 einer ersten Rolltransporteinheit 1 können die Räder 7, 8 einer zweiten Rolltransporteinheit 1 eingesetzt und dabei formschlüssig gegen Bewegungen innerhalb der Ebene der Aufstellfläche 2 fixiert werden, um so zwei Rolltransporteinheiten 1 aufzustapeln.

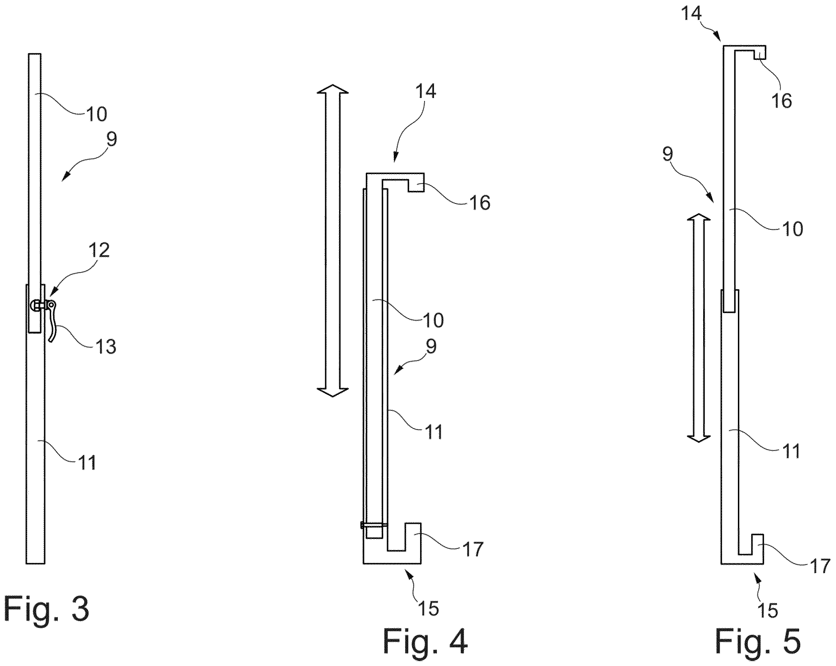

In den Figuren 3 bis 5 ist schematisch eine Riegelstange 9 eines erfindungsgemäßen Systems zum Transportieren, Umschlagen und/oder Lagern von Waren gezeigt. Diese Riegelstange 9 besteht aus zwei Stangenelementen, einem ersten Stangenelement 10 und einem zweiten, in das erste Stangenelement 10 eingesteckten Stangenelement 11, welches relativ zu dem ersten Stangenelement 10 verschiebbar ist, indem es in dieses eingetaucht oder aus diesem herausgezogen werden kann. Auf diese Weise kann die Länge der Riegelstange 9 teleskopartig verändert werden. Ein mit einem Hebel 13 betätigter Fixiermechanismus 12 erlaubt ein Fixieren der auf diese Weise stufenlos einstellbaren Länge der Riegelstange 9 nach der Einstellung auf ein gewünschtes Maß.

Die Figuren 4 und 5 zeigen seitliche Ansichten der Riegelstange 9. Zu erkennen ist hier, dass an einander gegenüberliegenden Längsenden, einem ersten Längsende 14 und einem zweiten Längsende 15 Haltestrukturen 16 und 17 in Form von Haltehaken ausgebildet sind. Die Figuren 4 und 5 verdeutlichen noch einmal die Möglichkeit der Längeneinstellung der Riegelstange 9 durch teleskopartiges Verschieben der beiden Stangenelemente 10 und 11 relativ zueinander.

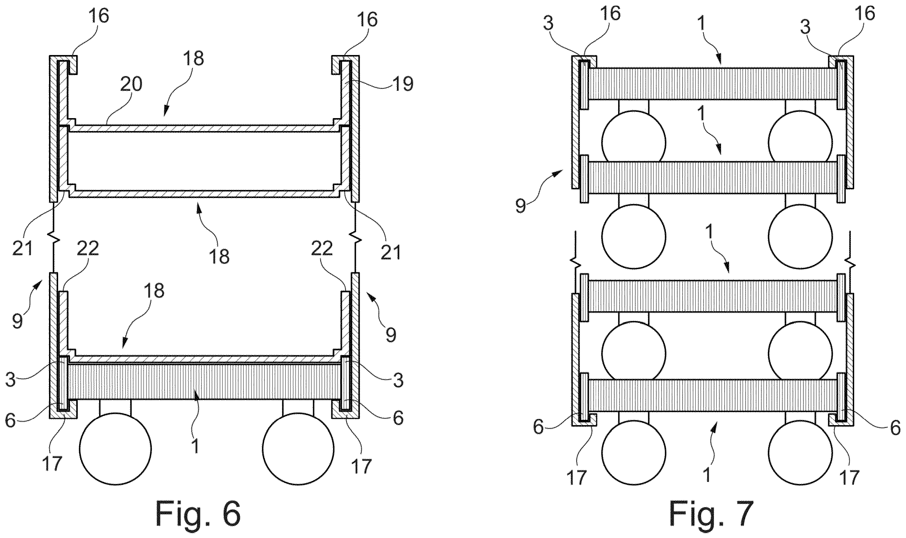

In Figur 6 ist eine schematische Ansicht eines mit Aufnahmebehältern 18 in Form von Stapelkisten gebildeten Behälterstapels auf einer Rolltransporteinheit 1 gezeigt. Die Aufnahmebehälter 18 in Form der Stapelkisten haben jeweils eine umlaufende Seitenwand 19 sowie einen Boden 20 und bilden im Bereich ihres Bodens 20 eine Stapelstruktur 21 aus, die mit einer Gegenstruktur 22, hier der Oberkante der Seitenwand 19, zusammenwirken um in einem aufeinandergestapelt Zustand einen Formschluss gegenüber Relativbewegungen parallel zu der Ebene des Bodens 20 zu verhindern. Die Stapelstrukturen 21 sind dabei ebenfalls so gebildet, dass sie mit der umlaufenden Leiste 3, die die Aufstellfläche 2 der Rolltransporteinheit 1 begrenzt, in gleicher Weise formschlüssig zusammenwirken. Zu erkennen ist hier auch, wie der so auf der Rolltransporteinheit 1 gebildete Stapel aus Aufnahmebehältern 18 mittels zweier Riegelstangen 6 formschlüssig in einer Richtung quer zu den Ebenen der Böden 20 gesichert ist, indem die Riegelstangen 9 mit ihren hakenförmigen Halteelementen 16, 17 die Gegenstrukturen in Form der Oberkanten der Seitenwände 19 des obersten Transportbehälters 18 in dem Stapel umgreifen bzw. die Gegenstrukturen in Form der unterseitigen Leiste 6 an der Rolltransporteinheit 1, wobei die Riegelstangen 9 in ihrer Länge so verkürzt und eingestellt sind, dass der Formschluss bestehen bleibt, dass also die Riegelstangen 9 den Stapel aus Aufnahmebehältern in sich sichern und zugleich an der Rolltransporteinheit 1 halten.

Figur 7 zeigt in einem weiteren Beispiel, wie zum Beispiel ein Stapel aus aufeinander gestellten Rolltransporteinheiten 1 in gleicher Weise mit den Riegelstangen 9 fixiert und gesichert werden kann. Auch hier umgreifen die Riegelstangen 9 mit ihren Halterstrukturen 16, 17 entsprechende Gegenstrukturen, nämlich einmal die umlaufende Leiste 3 der obersten der aufgestapelten Rolltransporteinheiten 1 und die unterseitige Leiste 6 der untersten, den Stapel tragenden Rolltransporteinheit 1.

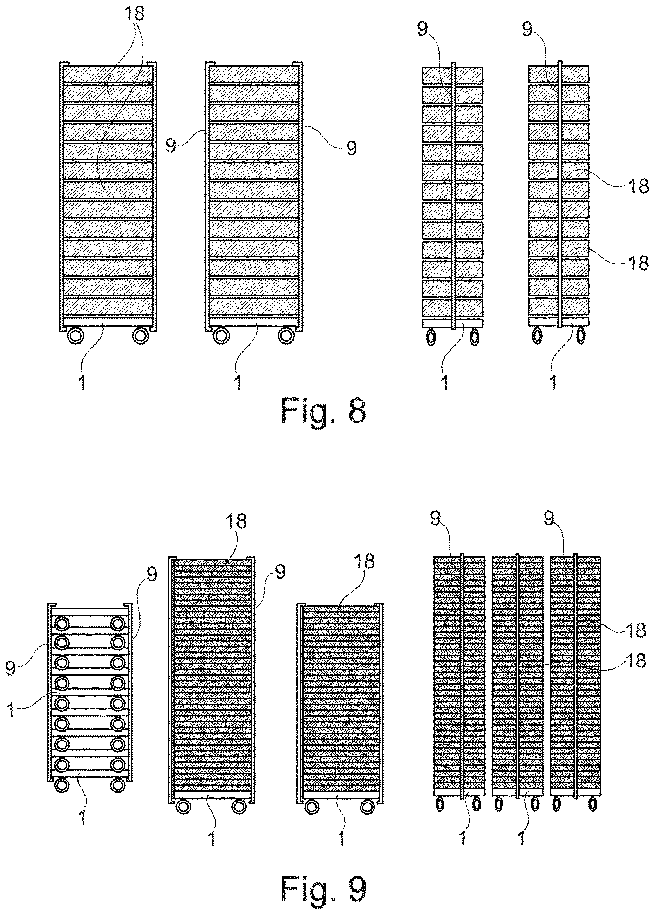

Auf diese Weise kann zum Beispiel ein Stapel aus für die Lagerung oder den Transport von Waren aktuell nicht benötigten Rolltransporteinheiten 1 gebildet und entweder platzsparend in einem Lager verstaut oder aber raumsparend in einen Rücktransport gegeben werden. In Figur 8 ist noch einmal zur Veranschaulichung gezeigt, wie zwei Stapel aus Transportbehältern 18 jeweils auf einer Rolltransporteinheit 1 aufgestapelt und mit Riegelstangen 9 formschlüssig gesichert sind, wobei Figur 8 jeweils eine Seitenansicht der beiden Stapel und daneben eine Frontansicht der beiden nun in dieser Ansicht nebeneinander gestellten Stapel zeigt.

Figur 9 schließlich zeigt noch einmal eine Varietät von möglichen Zusammenstellungen auf einer Rolltransporteinheit 1 aufgestapelt und mit den Riegelstangen 9 gesicherten Bestandteilen des erfindungsgemäßen Systems, nämlich links ein Stapel aus Rolltransporteinheiten 1, erneut gesichert mit den Riegelstangen 9, und dann in fünf verschiedenen Ansichten und mit teilweise unterschiedlicher Stapelhöhe Stapel aus Aufnahmebehältern 18, die hier solche mit umklappbaren Seitenwänden, insbesondere Klappkisten, sind, die ebenfalls mit den Riegelstangen 9 gesichert und formschlüssig ineinander festgelegt sind. Dabei ist anzumerken, dass die zusammengeklappten Aufnahmebehälter 18 in einer - für derartige Transportkisten an sich bereits bekannten Weise - auf einer Oberseite im zusammengeklapptem Zustand ebenfalls Gegenstrukturen für die Aufnahme der Stapelstrukturen 21 auf der Unterseite des nachfolgend aufgestapelten Aufnahmebehälters 18 bilden. An diesen Strukturen greifen die Riegelstangen 9 mit ihren oberen Haltestrukturen 16 an. Diese Darstellung in Figur 9 veranschaulicht noch einmal die Flexibilität, mit der aus den unterschiedlichen Elementen des erfindungsgemäßen Systems bei einem Nichtgebrauch für die Lagerung bzw. für den Transport von Waren raumsparende Stapel gebildet werden können, wie also hierdurch der Raumbedarf für eine Zwischenlagerung und/oder einen Rücktransport erheblich verringert, zugleich das Handhaben dieser Stapel erheblich erleichtert wird, da auch diese Stapel ebenso wie die in Figur 8 gezeigten Stapel mit den zum Beispiel mit Waren gefüllten Aufnahmebehältern 18 durch Angreifen an den Riegelstangen 9 auf der zuunterst angeordneten Rolltransporteinheit 1 verschoben werden können.

### Bezugszeichenliste

- 1: Rolltransporteinheit
- 2: Aufstellfläche
- 3: Leiste
- 4: Ausnehmung
- 5: Ausnehmung
- 6: Leiste
- 7: Rad
- 8: Rad
- 9: Riegelstange
- 10: Stangenelement
- 11: Stangenelement
- 12: Fixiermechanismus
- 13: Hebel
- 14: Längsende
- 15: Längsende
- 16: Haltestruktur
- 17: Haltestruktur
- 18: Aufnahmebehälter
- 19: Seitenwand
- 20: Boden
- 21: Stapelstruktur
- 22: Gegenstruktur

## Patentansprüche

1. System zum Transportieren, Umschlagen und/oder Lagern von Waren, insbesondere von Stückgutwaren im Groß- und Einzelhandel, mit
• stapelbaren, jeweils einen Boden (20), eine umlaufende Seitenwand (19) und eine obere Öffnung aufweisenden Aufnahmebehältern (18) für die Aufnahme von Waren während eines Transports und/oder während einer Lagerung, wobei die Aufnahmebehälter (18) im Bereich ihres Bodens (20) jeweils Stapelstrukturen (21) aufweisen, die mit in einem Bereich einer zu der oberen Öffnung weisenden Oberkante der Seitenwand (19) gebildeten Gegenstrukturen (22) zusammenwirkend ein innerhalb einer Ebene des Bodens (20) formschlüssig verriegelndes Aufeinanderstapeln von Aufnahmebehältern (18) ermöglichen,
• wenigstens einer eine Aufstellfläche (2) für wenigstens einen Aufnahmebehälter (18) und auf einer der Aufstellfläche (2) gegenüberliegenden Unterseite Rollmittel (7, 8) aufweisenden Rolltransporteinheit (1), wobei die Aufstellfläche (2) zu den Stapelstrukturen (21) korrespondierende Aufnahmestrukturen (3) aufweist zum innerhalb einer Ebene der Aufstellfläche (2) formschlüssig verriegelnden Aufstellen eines Aufnahmebehälters (18),
**gekennzeichnet durch**
• wenigstens eine zwei Längsenden (14, 15) aufweisende und in ihrer die Längsenden (14, 15) verbindenden Länge, insbesondere teleskopartig, verstellbaren Riegelstange (9), wobei an einem ersten der Längsenden (14) der Riegelstange (9) eine erste Haltestruktur (16) zum Verbinden mit einer Oberkante eines Aufnahmebehälters (18) vorgesehen ist und wobei an einem zweiten der Längsenden (15) der Riegelstange (9) eine zweite Haltestruktur (17) zum Verbinden mit einer, insbesondere auf der Unterseite angeordneten, Gegenstruktur (6) an der Rolltransporteinheit (1) vorgesehen ist, wobei die Riegelstange (9) einen lösbaren Fixiermechanismus (12) aufweist zum Begrenzen der auf ein ausgewähltes Maß eingestellten Länge der Riegelstange (9) auf das ausgewählte Maß.

2. System nach Anspruch 1, **dadurch gekennzeichnet, dass** der Fixiermechanismus (12) der Riegelstange (9) dazu eingerichtet ist, die Länge der Riegelstange (9) auf das eingestellte Maß zu fixieren.

3. System nach einem der vorhergehenden Ansprüche, **dadurch gekennzeichnet, dass** die wenigstens eine Rolltransporteinheit (1) ein Rolltableau mit einem die Aufstellfläche (2) ausbildenden Abstelltableau und auf der Unterseite angeordneten Rollmitteln (7, 8) ist.

4. System nach Anspruch 3, **dadurch gekennzeichnet, dass** das Rolltableau frei von auf der die Aufstellfläche (2) bildenden Oberseite des Abstelltableaus angeordneten Aufbauten ist, die eine höhere Bauhöhe haben als eine Höhe eines Aufnahmebehälters (18).

5. System nach einem der vorhergehenden Ansprüche, **dadurch gekennzeichnet, dass** es mehrere gleich gebildete Rolltransporteinheiten (1) umfasst.

6. System nach Anspruch 5, **dadurch gekennzeichnet, dass** wenigstens ein Teil der Rolltransporteinheiten (1) in der Aufstellfläche (2) Strukturen (4, 5) zum formschlüssigen Aufnehmen der Rollmittel (7, 8) einer auf die Aufstellfläche (2) aufgestellten weiteren Rolltransporteinheit (1) aufweist.

7. System nach einem der vorhergehenden Ansprüche, **dadurch gekennzeichnet, dass** die Aufnahmebehälter (18), insbesondere quaderförmig gebildete, Kisten sind.

8. System nach einem der vorhergehenden Ansprüche, **dadurch gekennzeichnet, dass** die Aufnahmebehälter (18) jeweils relativ zu ihrem Boden (20) verschwenkbare, im Wesentlichen parallel zu dem Boden auf diesen umschwenkbare Seitenwände (19) aufweisen und dass die Seitenwände (19) in einem umgeschwenkten Zustand auf der dem Boden (20) abgewandten Seite zu den Stapelstrukturen korrespondierende Aufnahmestrukturen aufweisen zum formschlüssig verriegelnden Aufstapeln eines weiteren Aufnahmebehälters (18).

9. System nach einem der vorhergehenden Ansprüche, **dadurch gekennzeichnet, dass** die Riegelstange (9) aus zwei ineinander gesteckten Stangenelementen (10, 11) gebildet ist, die für eine Einstellung der Länge relativ zueinander verschiebbar sind.

10. System nach einem der vorhergehenden Ansprüche, **dadurch gekennzeichnet, dass** die Riegelstange (9) einen rechteckigen oder quadratischen Querschnitt aufweist.

11. System nach einem der vorhergehenden Ansprüche, **dadurch gekennzeichnet, dass** die Haltestrukturen (16, 17) der Riegelstange (9) als Hakenstrukturen gebildet sind.

12. System nach einem der vorhergehenden Ansprüche, **dadurch gekennzeichnet, dass** der lösbare Fixiermechanismus der Riegelstange (9) eingerichtet ist, um eine stufenlose Längenverstellung der Riegelstange zu ermöglichen.

13. System nach einem der vorhergehenden Ansprüche, **dadurch gekennzeichnet, dass** die Riegelstange (9) aus einem metallischen Werkstoff gebildet ist.

14. System nach einem der vorhergehenden Ansprüche, **gekennzeichnet durch** eine Mehrzahl von gleich gebildeten Riegelstangen (9).

## Claims

1. A system for transporting, handling and/or storing goods, in particular piece goods in wholesale and retail trade, with
• stackable receiving containers (18), each having a base (20), a peripheral side wall (19) and an upper opening, for receiving goods during transport and/or during storage, the receiving containers (18) each having stacking structures (21) in the region of their base (20), which, in cooperation with counter-structures (22) formed in a region of an upper edge of the side wall (19) facing the upper opening, permit a positively locking stacking of receptacles (18) one on top of the other within one plane of the base (20),
• at least one roller transport unit (1) having a setting-up surface (2) for at least one receptacle (18) and rolling means (7, 8) on an underside opposite the setting-up surface (2), the setting-up surface (2) having receiving structures (3) corresponding to the stacking structures (21) for setting up a receptacle (18) with positive locking within a plane of the setting-up surface (2),
**characterised by**
• at least one locking bar (9) having two longitudinal ends (14, 15) and being adjustable, in particular telescopically, in its length connecting the longitudinal ends (14, 15), wherein a first holding structure (16) for connection to an upper edge of a receiving container (18) is provided at a first of the longitudinal ends (14) of the locking bar (9), and wherein a second holding structure (17) for connection to a receiving container (18) is provided at a second of the longitudinal ends (15) of the locking bar (9), in particular arranged on the underside, counter structure (6) is provided on the roller transport unit (1), wherein the locking bar (9) has a releasable fixing mechanism (12) for limiting the length of the locking bar (9) set to a selected dimension to the selected dimension.

2. A system according to claim 1, **characterised in that** the fixing mechanism (12) of the locking bar (9) is adapted to fix the length of the locking bar (9) to the set dimension.

3. A system according to any of the preceding claims, **characterised in that** the at least one roller transport unit (1) is a roller tableau with a storage tableau forming the standing surface (2) and rolling means (7, 8) arranged on the underside.

4. A system according to claim 3, **characterised in that** the rolling tableau is free of superstructures which are arranged on the upper side of the storage tableau forming the support surface (2) and which have a higher overall height than a height of a receiving container (18).

5. A system according to any of the preceding claims, **characterised in that** it comprises a plurality of identically formed roller transport units (1).

6. A system according to claim 5, **characterised in that** at least some of the roll transport units (1) in the set-up surface (2) have structures (4, 5) for positively receiving the rolling means (7, 8) of a further roll transport unit (1) set up on the set-up surface (2).

7. A system according to one of the preceding claims, **characterised in that** the receptacles (18) are boxes, in particular boxes formed in a parallelepiped shape.

8. A system according to one of the preceding claims, **characterised in that** the receptacles (18) each have side walls (19) which can be pivoted relative to their base (20) and can be pivoted essentially parallel to the base onto the latter, and **in that** the side walls (19), in a pivoted-over state, have, on the side facing away from the base (20), receiving structures corresponding to the stacking structures, for the positively locking stacking of a further receptacle (18).

9. A system according to one of the preceding claims, **characterised in that** the locking rod (9) is formed by two rod elements (10, 11) inserted into each other, which are displaceable relative to each other for adjusting the length.

10. A system according to one of the preceding claims, **characterised in that** the locking bar (9) has a rectangular or square cross-section.

11. A system according to one of the preceding claims, **characterised in that** the holding structures (16, 17) of the locking bar (9) are formed as hook structures.

12. A system according to one of the preceding claims, **characterised in that** the releasable fixing mechanism of the locking bar (9) is arranged to allow continuous length adjustment of the locking bar.

13. A system according to one of the preceding claims, **characterised in that** the locking bar (9) is formed of a metallic material.

14. A system according to any of the foregoing claims, **characterised by** a plurality of identically formed locking bars (9).

## Revendications

1. Système de transport, de manutention et/ou de stockage de marchandises, en particulier de marchandises à la pièce dans le commerce de gros et de détail, avec
• des conteneurs de réception (18) empilables, présentant chacun un fond (20), une paroi latérale périphérique (19) et une ouverture supérieure, conçus pour recevoir des marchandises pendant le transport et/ou le stockage, les conteneurs de réception (18) présentant chacun, dans la zone de leur fond (20), des structures d'empilage (21) qui, en coopération avec des contre-structures (22) formées dans une zone d'un bord supérieur de la paroi latérale (19) tourné vers l'ouverture supérieure, permettent un empilage à engagement positif des conteneurs (18) les uns sur les autres dans un plan du fond (20),
• au moins une unité de transport à rouleaux (1) comportant une surface de montage (2) pour au moins un récipient (18) et des moyens de roulement (7, 8) sur une face inférieure opposée à la surface de montage (2), la surface de montage (2) comportant des structures de réception (3) correspondant aux structures d'empilage (21) pour le montage à engagement positif d'un récipient (18) dans un plan de la surface de montage (2),
**caractérisé par**
• au moins une barre de verrouillage (9) présentant deux extrémités longitudinales (14, 15) et dont la longueur reliant les extrémités longitudinales (14, 15) est réglable, en particulier de manière télescopique, une première structure de maintien (16) conçue pour être reliée à un bord supérieur d'un récipient de réception (18) étant prévue à une première des extrémités longitudinales (14) de la barre de verrouillage (9), et dans lequel une seconde structure de maintien (17) pour la liaison avec un conteneur de réception (18) est prévue à une seconde des extrémités longitudinales (15) de la barre de verrouillage (9), en particulier disposée sur la face inférieure, une contre-structure (6) est prévue sur l'unité de transport à rouleaux (1), dans lequel la barre de verrouillage (9) présente un mécanisme de fixation (12) amovible pour limiter la longueur de la barre de verrouillage (9) réglée à une dimension choisie à la dimension choisie.

2. Système selon la revendication 1, **caractérisé en ce que** le mécanisme de fixation (12) de la barre de verrouillage (9) est conçu pour fixer la longueur de la barre de verrouillage (9) à la dimension fixée.

3. Système selon l'une des revendications précédentes, **caractérisé en ce qu'**au moins une unité de transport à rouleaux (1) est un tableau à rouleaux avec un tableau de rangement formant la surface d'appui (2) et des moyens de roulement (7, 8) disposés sur la face inférieure.

4. Système selon la revendication 3, **caractérisé en ce que** le tableau roulant est exempt de superstructures qui sont disposées sur le côté supérieur du tableau de rangement formant la surface d'appui (2) et qui ont une hauteur totale plus élevée qu'une hauteur d'un conteneur de réception (18).

5. Système selon l'une des revendications précédentes, **caractérisé en ce qu'**il comprend une pluralité d'unités de transport à rouleaux (1) de forme identique.

6. Système selon la revendication 5, **caractérisé en ce qu'**au moins certaines des unités de transport de rouleaux (1) dans la surface de montage (2) ont des structures (4, 5) pour recevoir positivement les moyens de roulement (7, 8) d'une autre unité de transport de rouleaux (1) montée sur la surface de montage (2).

7. Système selon l'une des revendications précédentes, **caractérisé en ce que** les réceptacles (18) sont des boîtes, en particulier des boîtes de forme parallélépipédique.

8. Système selon l'une des revendications précédentes, **caractérisé en ce que** les récipients (18) présentent chacun des parois latérales (19) qui peuvent pivoter par rapport à leur fond (20) et qui peuvent être pivotées sur ce dernier essentiellement parallèlement au fond, et **en ce que** les parois latérales (19), dans un état pivoté, présentent, sur le côté opposé au fond (20), des structures de réception correspondant aux structures d'empilage, pour l'empilage à engagement positif d'un autre récipient (18).

9. Système selon l'une des revendications précédentes, **caractérisé en ce que** la tige de verrouillage (9) est formée par deux éléments de tige (10, 11) insérés l'un dans l'autre, qui sont déplaçables l'un par rapport à l'autre pour ajuster la longueur.

10. Système selon l'une des revendications précédentes, **caractérisé en ce que** la barre de verrouillage (9) a une section transversale rectangulaire ou carrée.

11. Système selon l'une des revendications précédentes, **caractérisé en ce que** les structures de maintien (16, 17) de la barre de verrouillage (9) sont formées comme des structures à crochets.

12. Système selon l'une des revendications précédentes, **caractérisé en ce que** le mécanisme de fixation libérable de la barre de verrouillage (9) est disposé de manière à permettre un réglage continu de la longueur de la barre de verrouillage.

13. Système selon l'une des revendications précédentes, **caractérisé en ce que** la barre de verrouillage (9) est formée d'un matériau métallique.

14. Système selon l'une des revendications précédentes, **caractérisé par** une pluralité de barres de verrouillage (9) de forme identique.
